# EUROPEAN PATENT SPECIFICATION

(11) **EP 3 921 513 B1**
(45) Date of publication and mention of the grant of the patent: **28.02.2024**
(21) Application number: 19914661.4
(22) Date of filing: 10.07.2019
(51) Int. Cl.: E21B 47/00, E21B 47/12, E21B 41/00, F17D 5/02, F17D 5/06

(54) **REMOTELY LOCATING A BLOCKAGE IN A PIPELINE FOR TRANSPORTING HYDROCARBON FLUIDS**
FERNLOKALISIERUNG EINER VERSTOPFUNG IN EINER PIPELINE ZUM TRANSPORT VON KOHLENWASSERSTOFFFLÜSSIGKEITEN
LOCALISATION À DISTANCE D'UN BLOCAGE DANS UNE CANALISATION DE TRANSPORT DE FLUIDES HYDROCARBONÉS

(30) Priority: 04.02.2019 US 201962800970 P
(43) Date of publication of application: 15.12.2021
(73) Proprietor: Halliburton Energy Services, Inc., Houston, TX 77032 (US)
(72) Inventor: JAGANNATHAN, Srinivasan, Houston, Texas 77041 (US)
(74) Representative: Hoffmann Eitle
(86) International application number: PCT/US2019/041179
(87) International publication number: WO 2020/162964

(56) References cited:
- WO-A2-02/10709
- JP-A- 2011 075 384
- KR-B1- 101 577 733
- US-A- 3 814 207
- US-A- 5 708 195
- US-A1- 2005 210 960
- US-A1- 2005 210 960
- US-A1- 2015 143 920
- US-A1- 2015 323 119
- US-A1- 2015 331 007
- US-A1- 2016 252 422
- US-A1- 2018 202 612
- US-A1- 2018 202 612
- US-B2- 8 717 183

## Description

### Technical Field

The present disclosure relates generally to detecting a blockage in a pipeline for transporting hydrocarbon fluids. More particularly, the present disclosure relates to a system that that can remotely locate a blockage, such as a pipeline inspection gauge, without the need for a device located along the pipeline to provide position information.

### Background

Pipeline networks can be used for transporting oil and gas from their source to refineries, and from refineries to distribution centers. Maintenance of these pipeline networks can be performed for economic purposes as well as for regulatory purposes. Pigging (or the use of a pipeline inspection gauge, sometimes called a pig) can be employed in this maintenance. Maintenance can include both identifying and fixing pipeline problems. Examples of such problems include cracks, leaks, and internal debris that builds up over time.

Some newer pipeline inspection gauges are equipped with traction wheels, for example, and onboard circuitry, either mechanical or electrical, to keep track of the distance traveled by the pipeline inspection gauge. This information is then suitably telemetered to a monitoring system so that an operator can know the location of the pipeline inspection gauge throughout the time it is in the pipe. The document US2005210960A1 discloses the remote inspection of a pipeline system.

### Brief Description of the Drawings

FIG. 1 is a view of an example of a launching and monitoring system that includes the capability for real-time monitoring of the location of a pipeline inspection gauge or other blockage according to some aspects of the disclosure.
FIG. 2 is a block diagram of a computing system for monitoring of the location of a pipeline inspection gauge or other blockage according to some aspects of the disclosure.
FIG. 3 is a flowchart of a process for location of a blockage according to some aspects of the disclosure.
FIG. 4 is a flowchart of a process for real-time monitoring of the location of a pipeline inspection gauge or other blockage according to some aspects of the disclosure.
FIG. 5 is a pressure wave graph used in a monitoring system that includes the capability of determining the location of a blockage according to some aspects of the disclosure.
FIG. 6 is a correlation graph used in a monitoring system that includes the capability of determining the location of a blockage according to some aspects of the disclosure.

### Detailed Description

Certain aspects and features relate to using dynamic pressure wave propagation in pipelines to interrogate and provide information about the available, unobstructed hydraulic diameter and any partial or complete blockages in the pipeline. Certain aspects and features can be used to locate a pipeline inspection gauge, which may be referred to herein as a pig. In terms of a pressure profile, the pig can be similar to other types of pipeline blockages.

A challenge is faced by pipeline operators is terms of the need to track pigs in real time, or near real time. Some newer pigs are equipped with traction wheels, for example, and onboard circuitry (either mechanical or electrical) to keep track of the distance traveled using the traction wheels. However, the majority of pigs still in use do not have such "smart" capabilities. Also, a smart pig's traction wheels can become fouled so that the telemetry coming from the smart pig is inaccurate. Additionally, the battery within a smart pig may become exhausted during use, meaning the pig must be located without relying on telemetry.

Certain aspects and features allow for tracking a blockage without the need for an instrument at or near the location of the blockage. The blockage reflects pressure signals and can be tracked using reflected pressure signals. There is no need to lay down cabling or instrumentation along a pipeline such as fiber optic cables or acoustic sensor cables. Instead, a pressure transducer in an existing port in the pipeline can be used. There is no need for the pipeline operator to turn off flow since the technique can make use of fluid flow that occurs during normal pipeline operations to generate dynamic pressure waves. The technique can be used at little cost and with little disruption to pipeline operations.

In one example, there is a pig in a pipeline and a pressure wave can be used to locate the pig. Regular pulsing of the pipeline with a pressure wave can further be used to locate the pig as it moves overtime. A valve or any other suitable device can be used to generate the pressure wave. Suitable devices for generating the pressure wave include a plunger and a pump. The pressure wave can also be generated with an acoustic transducer. A blockage detection algorithm can be used for location determination.

In some examples, a system using dynamic pressure wave propagation to locate a blockage in a pipeline includes a pressure transducer for coupling with a pipeline and a processing device communicatively that can be coupled to the pressure transducer. The system according to some examples further includes a non-transitory memory device including instructions that are executable by the processing device to cause the processing device to perform operations. In some examples, the operations include recording pressure as a function of time in response a dynamic pressure change in the pipeline to produce a pressure waveform and performing a time series analysis of the pressure waveform. The system can then determine a position of the blockage in the pipeline based on the time series analysis, and store or report the position of the blockage.

In some examples, the system can automatically launch a pig and provide real-time tracking by repeatedly determining, and storing or reporting, the position of the pig over time. The system can initiate the dynamic pressure change by operating a valve or valves, operating an air gun, operating a plunger, operating a pump, operating acoustic transducer, or operating a combination of these.

In some examples, the time series analysis of the pressure waveform includes segmenting an initial pressure value from a time series of pressure corresponding to the pressure waveform to form a wavelet, correlating the wavelet with the remainder of the time series of pressure, and removing correlation values below a pre-established threshold. The time series analysis can include performing a cross-correlation calculation for the pressure waveform to detect a delay value indicative of a reflection distance between the blockage and the source location. The time series analysis includes applying a Fourier transform to the pressure waveform to provide low frequency components and calculating a time delay from the at least one low-frequency components.

These illustrative examples are given to introduce the reader to the general subject matter discussed here and are not intended to limit the scope of the disclosed concepts. The following sections describe various additional features and examples with reference to the drawings in which like numerals indicate like elements, and directional descriptions are used to describe the illustrative aspects but, like the illustrative aspects, should not be used to limit the present disclosure.

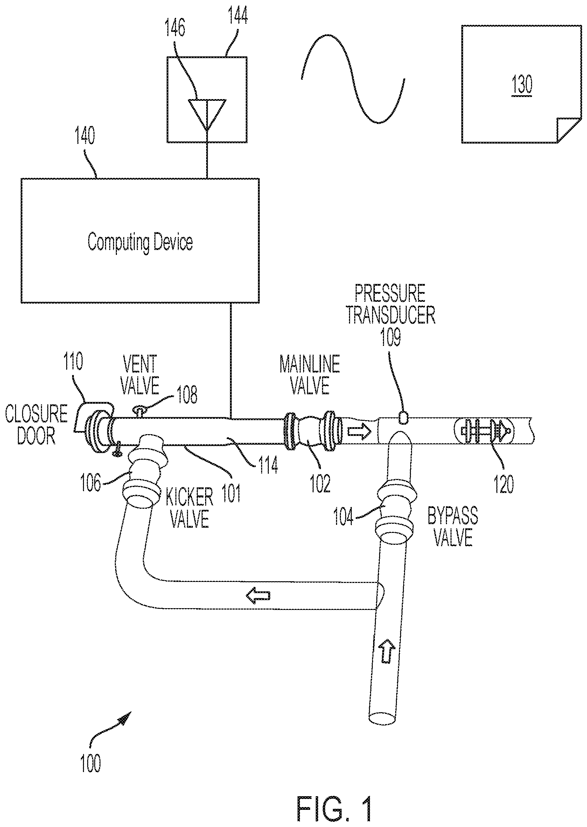

FIG. 1 shows a system 100 including a trap 101 for launching pigs. Arrows indicate airflow. Initially the trap 101 is pressurized and completely loaded with gas. Mainline trap valve 102, bypass valve 104, and kicker valve 106 are open. Vent valve 108 is closed. A pressure transducer 109 is installed in the mainline just after mainline trap valve 102. In order to launch a pig, as an example, mainline trap valve 102 and kicker valve 106 are closed. Vent valve 108 is opened to vent the trap to atmospheric pressure. When the trap is completely vented (zero or near zero manometric) with vent valve 108 still open, the closure door 110 is opened and the pig is inserted, adjusting itself into reduction 114 previous to the mainline trap valve 102. The closure door 110 is closed and secured and air is purged from the trap through vent valve 108 by slowly opening kicker valve 106. When the purge is done, vent valve 108 is closed to allow pressure equalization between trap and pipeline, then kicker valve 106 is closed. Once mainline trap valve 102 and kicker valve 106 are opened, the pig is ready to be launched. At that point, bypass valve 104 is partially closed to increase the gas flow rate through kicker valve 106 and behind the pig. Bypass valve 104 is closed until the pig 120 leaves the trap, inserting itself into the pipe current.

Still referring to FIG. 1, system 100 includes computing device 140. The computing device 140 in some aspects is connected to pressure transducer 109 for monitoring pressure waves. Optionally, the computing device 140 can also be connected to the various valves discussed above to control the launch of pig 120. Also, optionally, computing device 140 includes communication device 144, which may further include an antenna 146 for wireless communication. Communication device 144 can send reports 130 on the position of the pig 120 or other blockages to a remote location. The positions can be reported locally at computing system 140 as well. Computing device 140 includes a processor that determines the position by doing calculations as directed by executable computer program code instructions based on pressure changes detected by pressure transducer 109.

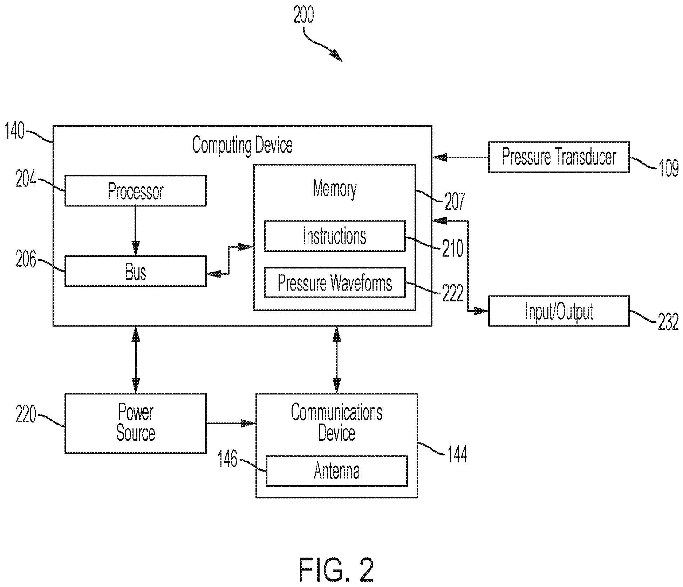

FIG. 2 is a block diagram of an example of a system 200 that determines the location of blockages using dynamic pressure wave propagation according to some aspects. In some examples, the components shown in FIG. 2 (e.g., the computing device 140, power source 220, and communications device 144) can be integrated into a single structure. For example, the components can be within a single housing. In other examples, the components shown in FIG. 2 can be distributed (e.g., in separate housings) and in electrical communication with each other.

The system 200 includes the computing device 140. The computing device 140 can include a processor 204, a memory 207, and a bus 206. The processor 204 can execute one or more operations for obtaining pressure transducer 109 and determining a location of a pig or other blockage. The processor 204 can execute instructions stored in the memory 207 to perform the operations. The processor 204 can include one processing device or multiple processing devices. Non-limiting examples of the processor 204 include a Field-Programmable Gate Array ("FPGA"), an application-specific integrated circuit ("ASIC"), a microprocessor, etc.

The processor 204 can be communicatively coupled to the memory 207 via the bus 206. The non-volatile memory 207 may include any type of memory device that retains stored information when powered off. Non-limiting examples of the memory 207 include electrically erasable and programmable read-only memory ("EEPROM"), flash memory, or any other type of non-volatile memory. In some examples, at least part of the memory 207 can include a medium from which the processor 204 can read instructions. A non-transitory computer-readable medium can include electronic, optical, magnetic, or other storage devices capable of providing the processor 204 with computer-readable instructions or other program code. Non-limiting examples of a computer-readable medium include (but are not limited to) magnetic disk(s), memory chip(s), ROM, random-access memory ("RAM"), an ASIC, a configured processor, optical storage, or any other medium from which a computer processor can read instructions. The instructions can include processor-specific instructions generated by a compiler or an interpreter from code written in any suitable computer-programming language, including, for example, C, C++, C#, etc.

In some examples, the memory 207 can include computer program code instructions 210 for initiating a pressure wave and determining the location of blockages using dynamic pressure wave propagation. Pressure waveforms 222 captured using pressure transducer 109 can be stored in memory 207 for analysis by processor 204 executing computer program code instructions 210. The system 200 can include a power source 220. The power source 220 can be in electrical communication with the computing device 140 and the communication device 144. In some examples, the power source 220 can include a battery or an electrical cable (e.g., a wireline). In some examples, the power source 220 can include an AC signal generator. The computing device 140 can operate the power source 220 to apply a signal to the communication device 144 to transmit location information or pressure waveforms. For example, the computing device 140 can cause the power source 220 to apply a voltage with a frequency within a specific frequency range to the communication device 144. In other examples, the computing device 140, rather than the power source 220, can apply the signal to communication device 144.

The communication device 144 of FIG. 2 can be implemented or partially implemented in software. For example, the communication device 144 can include instructions stored in memory 207. The communication device 144 can receive signals from remote devices and transmit data to remote devices. For example, the communication device 144 can transmit wireless communications that are modulated by data. In some examples, the communication device 144 can receive signals (e.g., associated with data to be transmitted) from the processor 204 and amplify, filter, modulate, frequency shift, and otherwise manipulate the signals.

System 200 in this example also includes input/output interface 232. Input/output interface 232 can connect to a keyboard, pointing device, display, and other computer input/output devices. An operator may provide input using the input/output interface 232. Such input may include a command to launch a pig or to initiate a pressure wave. Input/output interface 232 can also be used to display position information, pressure readings, or pressure waveforms locally to an operator using a display device (not shown.)

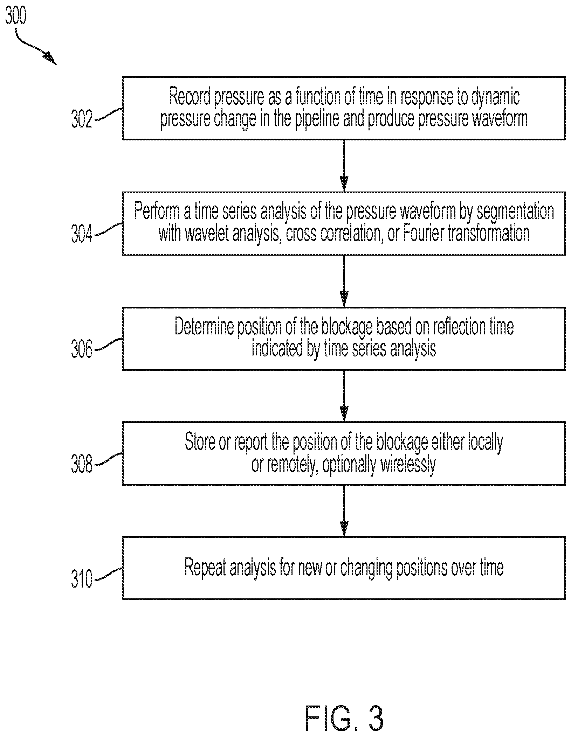

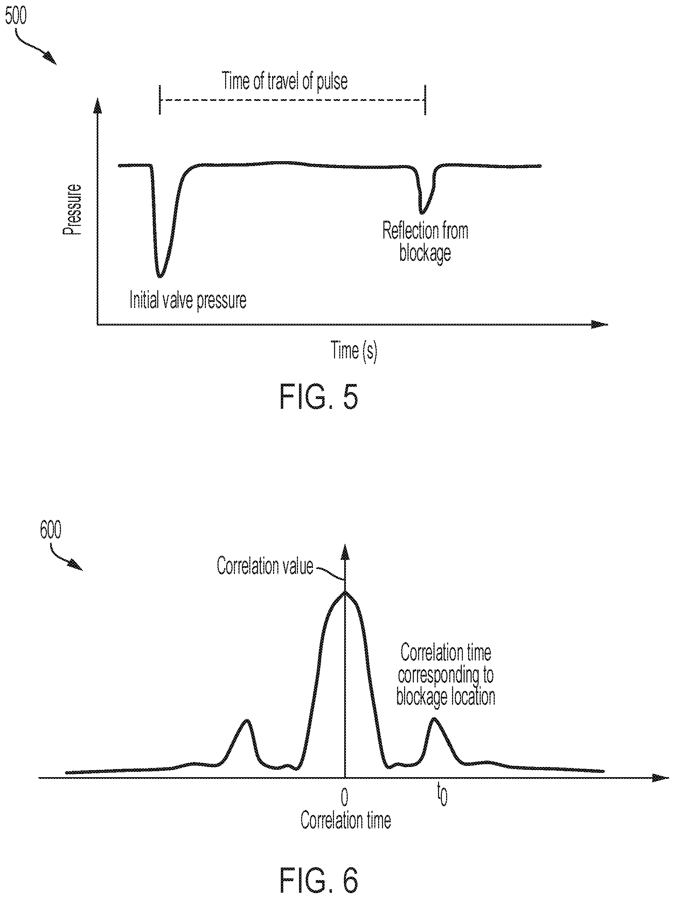

FIG. 3 is a flowchart of a process 300 for real-time location of a blockage according to some aspects of the disclosure. Process 300 is described with references to items shown in FIG. 1 and FIG. 2. At block 302, processor 204 records pressure as a function of time in response to dynamic pressure change in the pipeline. The processor 204 produces a pressure waveform and stores the pressure waveform in memory 207. At block 304, processor 204 performs a time series analysis of the pressure waveform by segmentation with wavelet analysis, cross correlation, or Fourier transformation, as described below, in part with reference to FIG. 5 and FIG. 6. At block 306, processor 204 determines the position of the blockage based on a reflection time indicated by time series analysis. At block 308, processor 204 stores or report the position of the blockage either locally or remotely. The position can optionally be reported remotely by wireless communication using communication device 144 and antenna 146. If the blockage is moving and is to be continuously tracked, the analysis repeats at block 310.

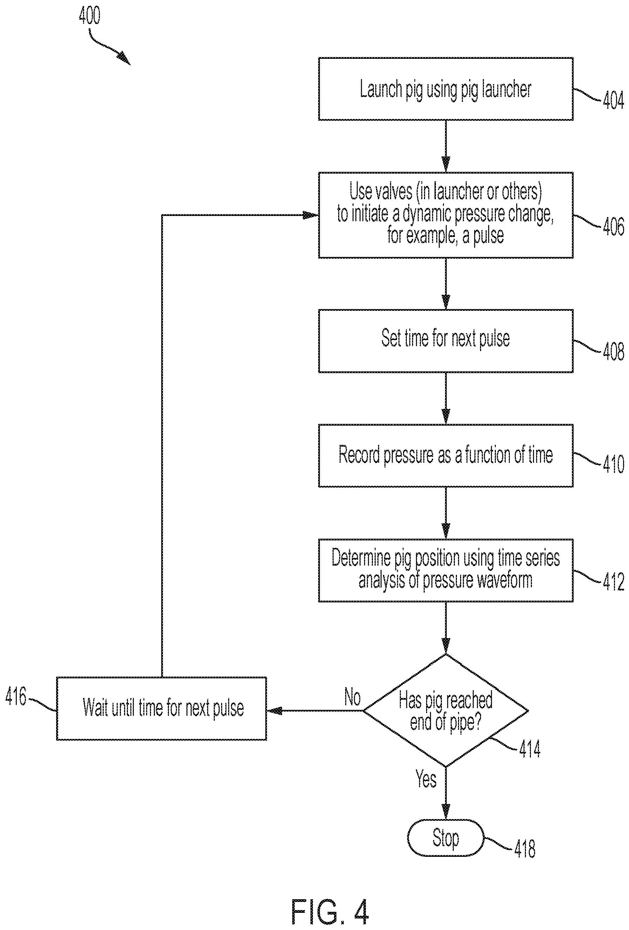

FIG. 4 is a flowchart showing a process 400 for real-time tracking of a pig. The same process can be used to track any other moving blockage. Process 400 is described with reference to items shown in FIG. 1 and FIG. 2. At block 404, the pig is launched either manually or under the control of computing device 140 as previously discussed with respect to FIG. 1. At block 406, valves, in the launcher and possibly elsewhere, are used to initiate a dynamic pressure change that propagates through the pipeline. An example of a dynamic pressure change is a pulse. The pulse is initiated by opening mainline trap valve 102 and kicker valve 106. Bypass valve 104 is closed. Mainline trap valve 102 is partially closed and quickly reopened. This entire process can take less than one second. Once this process has completed, recording of the pressure at pressure transducer 109 by processor 204 begins and time is tracked. In addition to being initiated with a valve, the pressure wave can be initiated using an air gun, a plunger, a pump, or another mechanical device. The pressure wave can also be initiated with an acoustic transducer.

Still referring to FIG. 4, at block 408, the time is projected for the next pulse, while the pressure function of time is recorded at block 410. The time for the next pulse can be set based on the likely velocity of the pig as well as how much resolution is desired by the operator. The likely velocity can be determined by look-up based on the type of pipeline and pig combination in use. This information can be input by an operator using I/O interface 232. This pressure function is stored in memory 207 as a dynamic pressure waveform 222. At block 412, processor 204 determines a position for the pig using time series analysis, to be further discussed below in part with reference to FIG. 5 and FIG. 6. When the pig reaches the end of the pipeline at block 414, the process ends at block 418. Otherwise, the system waits at block 416 for the time determined at block 408 to arrive, and the process repeated from block 406. The position of the pig or any moving blockage can be tracked in real time.

When a pressure wave is launched, due to a valve operation for example, the wave travels down the pipe and reflects from any anomalies in the pipe. These anomalies include changes to the (inner) diameter or fluid properties, such as density, as well as from blockages in the pipeline. The hydrodynamics pressure is recorded as a function of time. By computing the time taken for the reflection from a blockage to arrive at the known pressure transducer location, the distance to the blockage is computed using the sound speed of the fluid in the pipe. In a particular example, by partially closing mainline trap valve 102, a sudden drop in pressure is created as the flow of material is restricted. When the valve is opened again, the pressure increases, returning to the original value. This creates a negative pressure wave. A representation of this wave and typical pressure time series is shown in graph 500 of FIG. 5. In the example of FIG. 5, the reflection from the blockage corresponds to the location of the blockage. The time of travel of the pressure pulse is a round-trip time, i.e. the time for the pulse to travel from the source to the blockage and back to the pressure transducer.

There are several techniques to compute the two-way travel time from the type of signal shown in FIG. 5. Examples include wavelet analysis, cross-correlation, and frequency analysis. In wavelet analysis, the initial valve pressure is segmented out of the time series corresponding to the pressure in order to form a wavelet and the wavelet is correlated with the rest of the time series to identify the reflection time. Regions of high correlation correspond to reflections of interest. A threshold for correlation value is chosen to remove small reflections. Correlation values beneath the threshold value are removed leaving remaining correlation values that correspond to larger reflections such as those from blockages and the reflection distance determines the location relative to the pressure wave source location.

Cross-correlation of the signal can be determined by performing a cross-correlation of the pressure time signal. When cross-correlation is performed, repeated structures in the time series, such as reflections from blockages, show up as different delay values. An example of the correlation result is shown in graph 600 of FIG. 6. Delay values indicate the reflection distance between the blockage and the pressure wave source location.

Frequency analysis is performed by applying a Fourier transform to the pressure waveform. Repetitions of the source signal due to multiple reflections between the source and the blockage show up as low-frequency components in the spectrum. Tracking these components allows for the calculation of the time delay associated with the blockage signal. Time delay is calculated from a low-frequency component and indicates transit time, which is indicative of the reflection distance between the blockage and the pressure wave source location.

Terminology used herein is for the purpose of describing particular embodiments only and is not intended to be limiting. As used herein, the singular forms "a," "an," and "the" are intended to include the plural forms as well, unless the context clearly indicates otherwise. It will be further understood that the terms "comprises" or "comprising," when used in this specification, specify the presence of stated features, steps, operations, elements, or components, but do not preclude the presence or addition of one or more other features, steps, operations, elements, components, or groups thereof. Additionally, comparative, quantitative terms such as "above," "beneath," "less," and "greater" are intended to encompass the concept of equality, thus, "less" can mean not only "less" in the strictest mathematical sense, but also, "less than or equal to."

Unless specifically stated otherwise, it is appreciated that throughout this specification that terms such as "processing," "calculating," "determining," "operations," or the like refer to actions or processes of a computing device, such as the controller or processing device described herein, that can manipulate or transform data represented as physical electronic or magnetic quantities within memories, registers, or other information storage devices, transmission devices, or display devices. The order of the process blocks presented in the examples above can be varied, for example, blocks can be re-ordered, combined, or broken into sub-blocks. Certain blocks or processes can be performed in parallel. The use of "configured to" herein is meant as open and inclusive language that does not foreclose devices configured to perform additional tasks or steps. Additionally, the use of "based on" is meant to be open and inclusive, in that a process, step, calculation, or other action "based on" one or more recited conditions or values may, in practice, be based on additional conditions or values beyond those recited. Elements that are described as "connected," "connectable," or with similar terms can be connected directly or through intervening elements.

In some aspects, a system for monitoring drill cuttings is provided according to one or more of the following examples. As used below, any reference to a series of examples is to be understood as a reference to each of those examples disjunctively (e.g., "Examples 1-4" is to be understood as "Examples 1, 2, 3, or 4").

Example 1. A system includes a pressure transducer for coupling with a pipeline for transporting hydrocarbon fluids, and a processing device communicatively couplable to the pressure transducer, and a non-transitory memory device. The memory device includes instructions that are executable by the processing device to cause the processing device to perform operations. The operations include recording pressure as a function of time in response a dynamic pressure change in the pipeline to produce a pressure waveform, performing a time series analysis of the pressure waveform, determining a position of a blockage in the pipeline based on the time series analysis, and storing or reporting the position of the blockage in the pipeline.

Example 2. The system of example 1, wherein the operations further include launching a pipeline inspection gauge; and repeatedly determining and storing or reporting the position of the pipeline inspection gauge over time.

Example 3. The system of example(s) 1-2 wherein storing or reporting the position of the blockage further includes reporting the position of the blockage to a remote location using wireless communication.

Example 4. The system of example(s) 1-3 wherein the operations further include initiating the dynamic pressure change by operating a valve, an air gun, a plunger, a pump, an acoustic transducer or any combination of these at a source location.

Example 5. The system of example(s) 1-4 wherein performing the time series analysis further includes segmenting an initial pressure value from a time series of pressure corresponding to the pressure waveform to form a wavelet, correlating the wavelet with a remainder of the time series of pressure, and removing correlation values below a pre-established threshold, wherein at least one of any remaining correlation values is indicative of a reflection distance between the blockage and the source location.

Example 6. The system of example(s) 1-5 wherein performing the time series analysis further includes performing a cross-correlation calculation for the pressure waveform to a detect delay value indicative of a reflection distance between the blockage and the source location.

Example 7. The system of example(s) 1-6 wherein performing the time series analysis further includes applying a Fourier transform to the pressure waveform to produce at least one low-frequency component, and calculating a time delay from the at least one low-frequency component, the time delay indicative of a reflection distance between the blockage and the source location.

Example 8. A method includes recording, by a processor, pressure as a function of time in response a dynamic pressure change in a pipeline to produce a pressure waveform, the pipeline transporting hydrocarbon fluids, performing, by the processor, a time series analysis of the pressure waveform, determining, by the processor, a position of a blockage in the pipeline based on the time series analysis, and storing or reporting, by the processor, the position of the blockage in the pipeline.

Example 9. The method of example 8 further includes launching a pipeline inspection gauge, and repeatedly determining and storing or reporting the position of the pipeline inspection gauge over time.

Example 10. The method of example(s) 8-9 further includes initiating the dynamic pressure change by operating a valve, an air gun, a plunger, a pump, an acoustic transducer or any combination of these at a source location.

Example 11. The method of example(s) 8-10 wherein performing the time series analysis further includes segmenting an initial pressure value from a time series of pressure corresponding to the pressure waveform to form a wavelet, correlating the wavelet with a remainder of the time series of pressure, and removing correlation values below a pre-established threshold, wherein at least one of any remaining correlation values is indicative of a reflection distance between the blockage and the source location.

Example 12. The method of example(s) 8-11 wherein performing the time series analysis further includes performing a cross-correlation calculation for the pressure waveform to a detect delay value indicative of a reflection distance between the blockage and the source location.

Example 13. The method of example(s) 8-12 wherein performing the time series analysis further includes applying a Fourier transform to the pressure waveform to produce at least one low-frequency component, and calculating a time delay from the at least one low-frequency component, the time delay indicative of a reflection distance between the blockage and the source location.

Example 14. A non-transitory computer-readable medium that includes instructions that are executable by a processor for causing the processor to perform operations related to monitoring a location of a blockage in a pipeline for transporting hydrocarbon fluids. The operations include recording pressure as a function of time in response a dynamic pressure change in the pipeline to produce a pressure waveform, performing a time series analysis of the pressure waveform, determining a position of the blockage in the pipeline based on the time series analysis, and storing or reporting the position of the blockage in the pipeline.

Example 15. The non-transitory computer-readable medium of example 14, wherein the operations further include launching a pipeline inspection gauge, and repeatedly determining and storing or reporting the position of the pipeline inspection gauge over time.

Example 16. The non-transitory computer-readable medium of example(s) 14-15 wherein storing or reporting the position of the blockage further includes reporting the position of the blockage to a remote location using wireless communication.

Example 17. The non-transitory computer-readable medium of example(s) 14-16 wherein the operations further comprise initiating the dynamic pressure change by operating a valve, an air gun, a plunger, a pump, an acoustic transducer, or any combination of these at a source location.

Example 18. The non-transitory computer-readable medium of example(s) 14-17 wherein performing the time series analysis further includes segmenting an initial pressure value from a time series of pressure corresponding to the pressure waveform to form a wavelet, correlating the wavelet with a remainder of the time series of pressure, and removing correlation values below a pre-established threshold, wherein at least one of any remaining correlation values is indicative of a reflection distance between the blockage and the source location.

Example 19. The non-transitory computer-readable medium of example(s) 14-18 wherein performing the time series analysis further includes performing a cross-correlation calculation for the pressure waveform to a detect delay value indicative of a reflection distance between the blockage and the source location.

Example 20. The non-transitory computer-readable medium of example(s) 14-19 wherein performing the time series analysis further includes applying a Fourier transform to the pressure waveform to produce at least one low-frequency component, and calculating a time delay from the at least one low-frequency component, the time delay indicative of a reflection distance between the blockage and the source location.

The foregoing description of the examples, including illustrated examples, has been presented only for the purpose of illustration and description and is not intended to be exhaustive or to limit the subject matter to the precise forms disclosed. Numerous modifications, combinations, adaptations, uses, and installations thereof can be apparent to those skilled in the art without departing from the scope of this disclosure. The illustrative examples described above are given to introduce the reader to the general subject matter discussed here and are not intended to limit the scope of the appended claims.

## Claims

1. A system comprising:
a pressure transducer (109) for coupling with a pipeline for transporting hydrocarbon fluids;
a processing device (140) communicatively couplable to the pressure transducer; and
a non-transitory memory device (207) comprising instructions that are executable by the processing device to cause the processing device to perform operations including:
recording pressure as a function of time in response a dynamic pressure change in the pipeline to produce a pressure waveform (222);
performing (304) a time series analysis of the pressure waveform which time series analysis comprises:
applying a Fourier transform to the pressure waveform to produce at least one low-frequency component and calculating a time delay from the at least one low-frequency component, the time delay indicative of a reflection distance between the blockage and the source location;
determining (300) a position of a blockage in the pipeline based on the time series analysis; and
storing or reporting (308) the position of the blockage in the pipeline.

2. The system of claim 1, wherein the operations further comprise:
launching a pipeline inspection gauge; and
repeatedly determining and storing or reporting the position of the pipeline inspection gauge over time.

3. The system of claim 1, wherein storing or reporting the position of the blockage further comprises reporting the position of the blockage to a remote location using wireless communication (114).

4. The system of claim 1, 2, or 3, wherein the operations further comprise initiating the dynamic pressure change by operating at least one of a valve, an air gun, a plunger, a pump, or an acoustic transducer at a source location.

5. The system of claim 4, wherein performing the time series analysis further comprises:
segmenting an initial pressure value from a time series of pressure corresponding to the pressure waveform to form a wavelet;
correlating the wavelet with a remainder of the time series of pressure; and
removing correlation values below a pre-established threshold, wherein at least one of any remaining correlation values is indicative of a reflection distance between the blockage and the source location.

6. The system of claim 4, wherein performing the time series analysis further comprises performing a cross-correlation calculation for the pressure waveform to a detect delay value indicative of a reflection distance between the blockage and the source location.

7. A method, comprising:
recording (302), by a processor, pressure as a function of time in response a dynamic pressure change in a pipeline to produce a pressure waveform, the pipeline transporting hydrocarbon fluids;
performing (304), by the processor, a time series analysis of the pressure waveform which time series analysis comprises applying a Fourier transform to the pressure waveform to produce at least one low-frequency component and calculating a time delay from the at least one low-frequency component, the time delay indicative of a reflection distance between the blockage and the source location;
determining (306), by the processor, a position of a blockage in the pipeline based on the time series analysis; and
storing or reporting (308), by the processor, the position of the blockage in the pipeline.

8. The method of claim 7 further comprising:
launching a pipeline inspection gauge; and
repeatedly determining and storing or reporting the position of the pipeline inspection gauge over time.

9. The method of claim 8, wherein the launching of the pipeline inspection gauge is controlled by the processor.

10. The method of claim 7, wherein storing or reporting the position of the blockage further comprises reporting the position of the blockage to a remote location using wireless communication.

11. The method of any of claims 7 to 10, further comprising initiating the dynamic pressure change by operating at least one of a valve, an air gun, a plunger, a pump, or an acoustic transducer at a source location.

12. The method of claim 11, wherein performing the time series analysis further comprises:
segmenting an initial pressure value from a time series of pressure corresponding to the pressure waveform to form a wavelet;
correlating the wavelet with a remainder of the time series of pressure; and
removing correlation values below a pre-established threshold, wherein at least one of any remaining correlation values is indicative of a reflection distance between the blockage and the source location.

13. The method of claim 11 wherein performing the time series analysis further comprises performing a cross-correlation calculation for the pressure waveform to a detect delay value indicative of a reflection distance between the blockage and the source location.

## Patentansprüche

1. System, umfassend:
einen Druckwandler (109) zum Koppeln mit einer Rohrleitung zum Transportieren von Kohlenwasserstofffluiden;
eine Verarbeitungsvorrichtung (140), die kommunikativ mit dem Druckwandler koppelbar ist; und
eine nichtflüchtige Speichervorrichtung (207), die Anweisungen umfasst, die von der Verarbeitungsvorrichtung ausführbar sind, um die Verarbeitungsvorrichtung zu veranlassen, Operationen auszuführen, einschließlich:
Aufzeichnen eines Drucks als eine Funktion der Zeit als Reaktion auf eine dynamische Druckänderung in der Rohrleitung, um eine Druckwellenform (222) zu erzeugen;
Durchführen (304) einer Zeitreihenanalyse der Druckwellenform, wobei die Zeitreihenanalyse umfasst:
Anwenden einer Fourier-Transformation auf die Druckwellenform, um mindestens eine Niederfrequenzkomponente zu erzeugen, und Berechnen einer Zeitverzögerung aus der mindestens einen Niederfrequenzkomponente, wobei die Zeitverzögerung einen Reflexionsabstand zwischen der Blockierung und dem Quellenort angibt;
Bestimmen (300) einer Position einer Blockierung in der Rohrleitung basierend auf der Zeitreihenanalyse; und
Speichern oder Melden (308) der Position der Blockierung in der Rohrleitung.

2. Das System nach Anspruch 1, wobei die Operationen weiter umfassen:
Einführen eines Rohrleitungs-Untersuchungsmessgeräts; und
wiederholtes Bestimmen und Speichern oder Melden der Position des Rohrleitungs-Untersuchungsmessgeräts im Laufe der Zeit.

3. System nach Anspruch 1, wobei das Speichern oder Melden der Position der Blockierung weiter ein Melden der Position der Blockierung an einen entfernten Standort unter Verwendung von drahtloser Kommunikation (114) umfasst.

4. System nach Anspruch 1, 2 oder 3, wobei die Operationen weiter ein Einleiten der dynamischen Druckänderung durch Betätigen mindestens eines von einem Ventil, einer Luftpistole, einem Kolben, einer Pumpe oder einem akustischen Wandler an einem Quellenort umfassen.

5. System nach Anspruch 4, wobei das Durchführen der Zeitreihenanalyse weiter umfasst:
Segmentieren eines anfänglichen Druckwerts aus einer Druckzeitreihe, die der Druckwellenform entspricht, um ein Wavelet zu bilden;
Korrelieren des Wavelets mit einem Rest der Druckzeitreihe; und
Entfernen von Korrelationswerten unterhalb eines vorab festgelegten Schwellenwerts, wobei mindestens einer der verbleibenden Korrelationswerte einen Reflexionsabstand zwischen der Blockierung und dem Quellenort anzeigt.

6. System nach Anspruch 4, wobei das Durchführen der Zeitreihenanalyse weiter ein Durchführen einer Kreuzkorrelationsberechnung für die Druckwellenform umfasst, um einen Verzögerungswert zu erkennen, der einen Reflexionsabstand zwischen der Blockierung und dem Quellenort angibt.

7. Verfahren, umfassend:
Aufzeichnen (302) eines Drucks als eine Funktion der Zeit als Reaktion auf eine dynamische Druckänderung in einer Rohrleitung durch einen Prozessor, um eine Druckwellenform zu erzeugen, wobei die Rohrleitung Kohlenwasserstofffluide transportiert;
Durchführen (304) einer Zeitreihenanalyse der Druckwellenform durch den Prozessor, wobei die Zeitreihenanalyse Anwenden einer Fourier-Transformation auf die Druckwellenform, um mindestens eine Niederfrequenzkomponente zu erzeugen, und Berechnen einer Zeitverzögerung aus der mindestens einen Niederfrequenzkomponente umfasst, wobei die Zeitverzögerung einen Reflexionsabstand zwischen der Blockierung und dem Quellenort angibt;
Bestimmen (306) einer Position einer Blockierung in der Rohrleitung durch den Prozessor basierend auf der Zeitreihenanalyse; und
Speichern oder Melden (308) der Position der Blockierung in der Rohrleitung durch den Prozessor.

8. Verfahren nach Anspruch 7, weiter umfassend:
Einführen eines Rohrleitungs-Untersuchungsmessgeräts; und
wiederholtes Bestimmen und Speichern oder Melden der Position des Rohrleitungs-Untersuchungsmessgeräts im Laufe der Zeit.

9. Verfahren nach Anspruch 8, wobei das Einführen des Rohrleitungs-Untersuchungsmessgeräts durch den Prozessor gesteuert wird.

10. Verfahren nach Anspruch 7, wobei das Speichern oder Melden der Position der Blockierung weiter ein Melden der Position der Blockierung an einen entfernten Standort unter Verwendung von drahtloser Kommunikation umfasst.

11. Verfahren nach einem der Ansprüche 7 bis 10, weiter umfassend Einleiten der dynamischen Druckänderung durch Betätigen mindestens eines von einem Ventil, einer Luftpistole, einem Kolben, einer Pumpe oder einem akustischen Wandler an einem Quellenort.

12. Verfahren nach Anspruch 11, wobei das Durchführen der Zeitreihenanalyse weiter umfasst:
Segmentieren eines anfänglichen Druckwerts aus einer Druckzeitreihe, die der Druckwellenform entspricht, um ein Wavelet zu bilden;
Korrelieren des Wavelets mit einem Rest der Druckzeitreihe; und
Entfernen von Korrelationswerten unterhalb eines vorab festgelegten Schwellenwerts, wobei mindestens einer der verbleibenden Korrelationswerte einen Reflexionsabstand zwischen der Blockierung und dem Quellenort anzeigt.

13. Verfahren nach Anspruch 11, wobei das Durchführen der Zeitreihenanalyse weiter ein Durchführen einer Kreuzkorrelationsberechnung für die Druckwellenform umfasst, um einen Verzögerungswert zu erkennen, der einen Reflexionsabstand zwischen der Blockierung und dem Quellenort angibt.

## Revendications

1. Système comprenant :
un transducteur de pression (109) destiné à être couplé à une canalisation de transport de fluides hydrocarbonés ;
un dispositif de traitement (140) pouvant être couplé en communication au transducteur de pression ; et
un dispositif de mémoire non transitoire (207) comprenant des instructions qui sont exécutables par le dispositif de traitement pour amener le dispositif de traitement à effectuer des opérations comportant :
l'enregistrement de la pression en fonction du temps en réponse à un changement de pression dynamique dans la canalisation pour produire une forme d'onde de pression (222) ;
la réalisation (304) d'une analyse de série chronologique de la forme d'onde de pression, laquelle analyse de série chronologique comprend :
l'application d'une transformée de Fourier à la forme d'onde de pression pour produire au moins une composante basse fréquence et le calcul d'un retard à partir de l'au moins une composante basse fréquence, le décalage temporel indiquant une distance de réflexion entre le blocage et l'emplacement de la source ;
la détermination (300) d'une position d'un blocage dans la canalisation sur la base de l'analyse de série chronologique ; et
le stockage ou le signalement (308) de la position du blocage dans la canalisation.

2. Système selon la revendication 1, dans lequel les opérations comprennent en outre :
le lancement d'une jauge d'inspection de canalisation ; et
la détermination et le stockage ou le signalement de manière répétée de la position de la jauge d'inspection de canalisation au fil du temps.

3. Système selon la revendication 1, dans lequel le stockage ou le signalement de la position du blocage comprend en outre le signalement de la position du blocage à un emplacement distant à l'aide d'une communication sans fil (114).

4. Système selon la revendication 1, 2 ou 3, dans lequel les opérations comprennent en outre le lancement du changement de pression dynamique par l'actionnement d'au moins l'un d'une vanne, d'un pistolet à air, d'un piston, d'une pompe ou d'un transducteur acoustique à un emplacement source.

5. Système selon la revendication 4, dans lequel la réalisation de l'analyse de série chronologique comprend en outre :
la segmentation d'une valeur de pression initiale à partir d'une série chronologique de pression correspondant à la forme d'onde de pression pour former une ondelette ;
la corrélation de l'ondelette avec un reste de la série chronologique de pression ; et
la suppression des valeurs de corrélation inférieures à un seuil préétabli, dans lequel au moins l'une quelconque des valeurs de corrélation restantes indique une distance de réflexion entre le blocage et l'emplacement source.

6. Système selon la revendication 4, dans lequel la réalisation de l'analyse de série chronologique comprend en outre la réalisation d'un calcul de corrélation croisée pour la forme d'onde de pression avec une valeur de retard de détection indiquant une distance de réflexion entre le blocage et l'emplacement de la source.

7. Procédé comprenant :
l'enregistrement (302), par un processeur, de la pression en fonction du temps en réponse à un changement de pression dynamique dans une canalisation pour produire une forme d'onde de pression, la canalisation transportant des fluides hydrocarbonés ;
la réalisation (304), par le processeur, d'une analyse de série chronologique de la forme d'onde de pression, laquelle analyse de série chronologique comprend l'application d'une transformée de Fourier à la forme d'onde de pression pour produire au moins une composante basse fréquence et le calcul d'un retard à partir de l'au moins une composante basse fréquence, le décalage temporel indiquant une distance de réflexion entre le blocage et l'emplacement de la source ;
la détermination (306), par le processeur, d'une position d'un blocage dans la canalisation sur la base de l'analyse de série chronologique ; et
le stockage ou le signalement (308), par le processeur, de la position du blocage dans la canalisation.

8. Procédé selon la revendication 7 comprenant en outre :
le lancement d'une jauge d'inspection de canalisation ; et
la détermination et le stockage ou le signalement de manière répétée de la position de la jauge d'inspection de canalisation au fil du temps.

9. Procédé selon la revendication 8, dans lequel le lancement de la jauge d'inspection de canalisation est commandé par le processeur.

10. Procédé selon la revendication 7, dans lequel le stockage ou le signalement de la position du blocage comprend en outre le signalement de la position du blocage à un emplacement distant à l'aide d'une communication sans fil.

11. Procédé selon l'une quelconque des revendications 7 à 10, comprenant en outre l'initiation du changement de pression dynamique par l'actionnement d'au moins l'un d'une vanne, d'un pistolet pneumatique, d'un piston, d'une pompe ou d'un transducteur acoustique à un emplacement source.

12. Procédé selon la revendication 11, dans lequel la réalisation de l'analyse de série chronologique comprend en outre :
la segmentation d'une valeur de pression initiale à partir d'une série chronologique de pression correspondant à la forme d'onde de pression pour former une ondelette ;
la corrélation de l'ondelette avec un reste de la série chronologique de pression ; et
la suppression des valeurs de corrélation inférieures à un seuil préétabli, dans lequel au moins l'une quelconque des valeurs de corrélation restantes indique une distance de réflexion entre le blocage et l'emplacement source.

13. Procédé selon la revendication 11, dans lequel la réalisation de l'analyse de série chronologique comprend en outre la réalisation d'un calcul de corrélation croisée pour la forme d'onde de pression avec une valeur de retard de détection indiquant une distance de réflexion entre le blocage et l'emplacement de la source.
